# EUROPÄISCHE PATENTSCHRIFT

(11) **EP 2 017 697 B1**
(45) Veröffentlichungstag und Bekanntmachung des Hinweises auf die Patenterteilung: **14.05.2014**
(21) Anmeldenummer: 07014275.7
(22) Anmeldetag: 20.07.2007
(51) Int. Cl.: G06F 3/033

(54) **Eingabestift für einen berührungsempfindlichen medizintechnischen Monitor**
Input pen for a touch sensitive medical monitor
Crayon de saisie pour un écran médical tactile

(43) Veröffentlichungstag der Anmeldung: 21.01.2009
(73) Patentinhaber: Brainlab AG, 85622 Feldkirchen (DE)
(72) Erfinder: Ringholz, Maria, 85609 Aschheim (DE); Osthues, Petra, 81547 München (DE)
(74) Vertreter: Schwabe - Sandmair - Marx

(56) Entgegenhaltungen:
- US-A- 4 834 068
- US-A- 5 959 617
- US-A1- 2005 057 535
- US-A1- 2006 001 654
- US-B1- 6 441 362

## Beschreibung

Die Erfindung betrifft einen Eingabestift für einen berührungsempfindlichen medizintechnischen Monitor.

Medizinisches oder medizintechnisches Bildmaterial, das mit Hilfe von medizintechnischen Bildgebungsverfahren erzeugt wird, wie z.B. mit Computertomographie, Kernspintomographie oder Röntgengeräten (zweidimensional/dreidimensional), wird in immer größerem Umfang als digitales Bildmaterial bzw. als digitaler Bilddatensatz gespeichert und dem Behandlungspersonal bei der bildunterstützten Behandlung zur Verfügung gestellt.

Dies geschieht über Monitore oder aber über digitale Schaukästen (Lightbox), und bei Weiterentwicklungen dieser Technik hat der Verwender die Möglichkeit, die Bilddarstellung oder die Bilddaten selbst durch Eingaben am Monitor bzw. an der Ughtbox zu verändern.

Wenn berührungsempfindliche Monitore (im Weiteren werden Monitore und digitale Schaukästen bzw. Lightboxen insgesamt als "Monitore" bezeichnet) verwendet werden, kann eine Eingabe über den Bildschirm selbst erfolgen.

Eingaben können grundsätzlich mit den Händen bzw. Fingern gemacht werden, oder aber durch hierfür vorgesehene Eingabestifte. Die Eingabe von Befehlen durch einen Eingabestift ist beispielsweise in der WO02/00297 A2 beschrieben, wobei zur Eingabe von Daten an einem berührungsempfindlichen Bildschirm ein einfacher Berührungsstift mit einer Spitze verwendet wird, wie er beispielsweise auch zu Eingabezwecken für Computer mit berührungsempfindlichen Bildschirmen oder PDAs benutzt wird.

Die US 2006/0001654 A1 offenbart eine Vorrichtung und ein Verfahren zur Dateneingabe mittels berühungsempfindlicher Bildschirme. Ferner wird in der US 2006/0001654 A1 ein Eingabestift mit einem gestaltveränderlichen Eingabeabschnitt beschrieben.

Die US 2005/0057535 A1 beschreibt einen Eingabestift, mit welchem verschiedene Striche simuliert werden können. Der Eingabestift umfasst eine Stiftspitze, einen Stiftspitzenpositionssensor und einen Drucksensor.

Die US 6,441,362 B1 offenbart einen Eingabestift für einen optischen Digitalumsetzer. Der Eingabestift kann unterschiedlich eingefärbte Stiftbestandteile umfassen.

Die US 5,959,617 betrifft ein Eingabesystem mit einer Lichtabtasteinrichtung und einem Eingabestift. Der Eingabestift emittiert einen Lichtstrahl, welcher einen Lichtfleck erzeugt.

Es ist die Aufgabe der vorliegenden Erfindung, einen Eingabestift für einen berührungsempfindlichen medizintechnischen Monitor bereitzustellen, der für die Zwecke der Betrachtung und Bildbearbeitung im medizinischen Umfeld optimiert ist. Insbesondere sollen die Eingabemöglichkeiten vielfältig gestaltet werden, und speziell sollen auch Sterilitätsprobleme gelöst werden.

Diese Aufgabe wird erfindungsgemäß durch einen Eingabestift gemäß dem Anspruch 1 gelöst. Die Unteransprüche definieren bevorzugte Ausführungsformen der Erfindung.

Der erfindungsgemäße Eingabestift ist zur Eingabe von Daten an einem berührungsempfindlichen medizintechnischen Monitor gedacht. Er kann deshalb auch als "medizintechnischer Eingabestift" oder "Medizintechnik-Monitor-Eingabestift" bezeichnet werden. Er weist einen Griffabschnitt und einen Eingabeabschnitt auf, wobei der Eingabeabschnitt eindimensionale und zweidimensionale Monitor-Berührungssektionen umfasst. Mit anderen Worten ist die "Eingabespitze" des erfindungsgemäßen Eingabestiftes vorteilhaft gestaltet worden, nämlich indem man ihr eine Form verleiht, welche die Eingabemöglichkeiten vervielfacht. Es wird von dem bisherigen Prinzip der einfachen punktförmigen Eingabemöglichkeit abgegangen und erfindungsgemäß erhält der Eingabeabschnitt eine Gestalt die - je nach Berührungslage am Monitor - verschieden identifizierbare und interpretierbare Eingaben zulässt.

Die erfindungsgemäße Gestaltung des Eingabestifts wirkt sich speziell dann vorteilhaft aus, wenn Monitore mit einer so genannten Multi-Touch-Funktion verwendet werden. Solche Monitore können mehrere Berührungsvorgänge gleichzeitig erfassen und dadurch z.B. punktförmige, linienförmige oder flächenförmige Berührungen unterscheiden. Mit einem einzigen, erfindungsgemäß ausgestalteten Eingabestift lassen sich aber gerade solche eindimensionalen und mehrdimensionalen Berührungen erzeugen, was die Anzahl möglicher Eingaben deutlich erhöht. Beispielsweise kann ein dargestelltes Bild auf dem Monitor durch eine Berührung mit dem eindimensionalen Berührungsabschnitt des Eingabestiftes ausgewählt und abgewählt werden, während eine Berührung des Bildes mit einem mehrdimensionalen Abschnitt und eine abfolgende ziehende Bewegung ein Verschieben des Bildes bewirken. Dazu muss lediglich die Interpretation der jeweiligen Berührung in der Datenverarbeitung für die Monitorsteuerung hinterlegt werden, und die gewünschten Eingaben können dann in sehr einfacher und unaufwändiger Weise mit einem einzigen Eingabestift erledigt werden. Die Vielfalt der möglichen Eingaben wird entsprechend erhöht.

Eine angesprochene eindimensionale Berührungssektion ist punktförmig - ausgestaltet und ermöglicht eine punktförmige Monitorberührung. Ferner ist eine zweidimensionale Berührungssektion linien- oder flächenförmig ausgestaltet und ermöglicht eine linien- oder flächenförmige Monitorberührung.

Wenn hierin von einer "Monitorberührung" die Rede ist, so umfasst dieser Begriff Ausführungsformen, bei denen der Monitor selbst tatsächliche Berührungen an seiner Oberfläche registriert, aber auch andere Ausführungsformen, bei denen in der Oberfläche des Monitors eine Lichtabtastung, beispielsweise durch Infrarotlichtgitter, stattfindet.

Bei einer erfindungsgemäßen Version des Eingabestiftes weist der Eingabeabschnitt an bestimmten vorgesehenen Stellen die ein- und zweidimensionalen Berührungssektionen auf. Andererseits kann der Eingabeabschnitt aber auch gestaltveränderlich ausgebildet sein, um durch Gestaltänderung ein- oder zweidimensionale Berührungssektionen auszubilden.

Erfindungsgemäße Lösungen für die zuletzt angesprochene Variation umfassen beispielsweise formveränderliche Eingabeabschnitte, wobei insbesondere flexible Berührungssektionen vorgesehen sind, die durch Formänderungen flexibel vom eindimensionalen in den zweidimensionalen Zustand wechseln oder umgekehrt. Ein Beispiel hierfür wäre eine konvexe Wölbung aus einem flexiblen Material am Eingabestift. Bei kugelförmiger Gestalt würde diese Kugel zuerst eine punktförmige Berührung und bei einem stärkeren Andrücken eine kreisförmige, flächenartige Berührung auslösen. Wenn der Eingabeabschnitt bei einem anderen Beispiel eine zylinderartige Außenform und ein flexibles Material aufweist, würde bei einer leichten Berührung eine linienförmige Eingabe erfolgen, bei stärkerem Andruck eine rechteckförmige Eingabeberührung.

Eine weitere Möglichkeit, durch Gestaltänderungen auch die Berührungssektion zu ändern besteht darin, den Eingabeabschnitt mechanisch gestaltveränderlich auszubilden. Dabei weist der Eingabeabschnitt insbesondere zueinander bewegliche, speziell zueinander federnd vorgespannte Teile auf, die einzeln oder zusammen die Berührungssektion bilden können.

Zwischen dem Griffabschnitt und dem Eingabeabschnitt, insbesondere am distalen Ende des Griffabschnittes ist eine flächenförmige Sterilitätsbarriere angeordnet, die zu allen Seiten hin quer vom Stiftkörper absteht. Schon durch seine Ausbildung aus einem leicht sterilisierbaren Material kann ein solcher Eingabestift reproduzierbar steril gehalten werden, d.h. nach der Verwendung gereinigt, desinfiziert und sterilisiert werden. Wenn zusätzlich noch eine vorher genannte Sterilitätsbarriere zwischen Griffabschnitt und Eingabeabschnitt vorgesehen wird, wird der Griffabschnitt während der Verwendung steril bleiben, während er durch die unsterilen Monitorberührungen am anderen Ende, d.h. am Eingabeabschnitt unsteril wird. Der Teil, den der Bediener greift, bleibt also steril und damit auch der Bediener.

Eine weitere mögliche Eingabeart, die durch einen erfindungsgemäß gestalteten Eingabestift verwirklicht werden kann, ist eine Rotations- oder Drehberührung. Speziell kann bei einem erfindungsgemäßen Eingabesystem am Eingabeabschnitt des Stiftes ein Signalgeber und am Monitor ein Signalempfänger angeordnet werden, der aus den vom Signalgeber empfangenen Signalen rotatorische Positionsänderungen des Eingabeabschnitts erkennt, insbesondere Drehungen, die im Wesentlichen um die Stiftachse stattfinden. Auch durch eine solche Ausführungsform lässt sich die Eingabevielfalt zusätzlich erhöhen.

Der Signalgeber kann ein Lichtabstrahler, insbesondere ein Infrarotlichtabstrahler sein, und der Signalempfänger ist dann ein lichtempfindliches Element. Ein Beispiel für ein solches lichtempfindliches Element ist eine Gruppe von Infrarotlichtempfängern, die um den Monitorrand angeordnet sind und zur Berührungsbestimmung für den berührungsempfindlichen Monitor dienen. Hier wird also ein Merkmal eines berührungsempfindlichen Monitors der mit einer Lichtabtastung arbeitet, vorteilhafterweise zweifach genutzt, nämlich einerseits für die Identifizierung von "Berührungen" und andererseits für die Identifizierung einer Drehbewegung des Eingabestiftes.

Ein etwas anders ausgestaltetes Eingabesystem gemäß der Erfindung ist so beschaffen, dass am Eingabeabschnitt ein Reflektor und am Monitor mindestens ein Signalgeber und mindestens ein Signalempfänger angeordnet sind, wobei der Signalempfänger aus den vom Reflektor empfangenen Signalen rotatorische Positionsänderungen des Eingabeabschnittes erkennt, insbesondere Drehungen, die im Wesentlichen um die Stiftachse stattfinden. Auch hierbei kann der Signalgeber einen Lichtabstrahler, insbesondere einen Infrarotlichtabstrahler und der Signalempfänger ein lichtempfindliches Element, insbesondere eine Gruppe von Infrarotlichtempfängern aufweisen, die um den Monitorrand angeordnet sind und zur Berührungsbestimmung für den berührungsempfindlichen Monitor dienen.

Die Erfindung wird im Weiteren anhand von Ausführungsformen und unter Bezugnahme auf die beiliegenden Zeichnungen näher erläutert. Sie kann alle hierin beschriebenen Merkmale einzeln sowie in jedweder sinnvollen Kombination umfassen. In den beiliegenden Zeichnungen zeigen:
- Figuren 1a bis 1d: eine Ausführungsform eines erfindungsgemäßen Eingabestiftes in verschiedenen projizierten Ansichten;
- Figuren 2 und 3: zwei Schrägansichten des Eingabestiftes aus Figur 1;
- Figur 4: eine Ausführungsform mit Erfassung der Drehung bzw. Rotation des Eingabestiftes; und
- Figur 5: eine weitere Ausführungsform für einen Eingabeabschnitt für die punktförmige und flächenförmige Berührung.

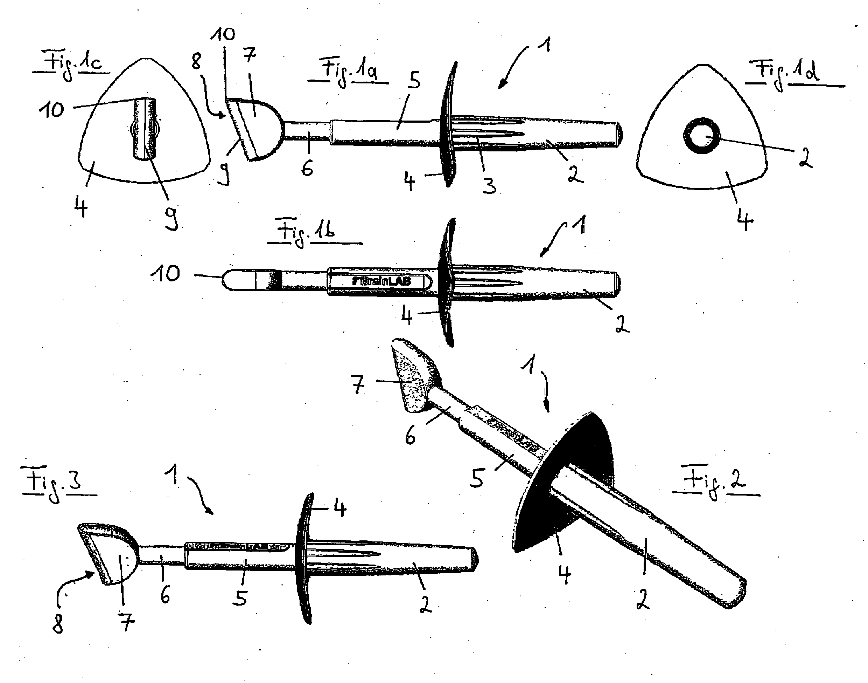

Der in den Figuren 1a bis 1d, 2 und 3 dargestellte erfindungsgemäße Eingabestift trägt insgesamt das Bezugszeichen 1. Er hat einen Griffabschnitt 2 mit Griffrillen 3, dessen distales (vorderes) Ende, von der Sterilitätsbarriere 4 gebildet wird, die als nach außen gerundeter dreieckiger Flächenkörper von dem Stiftkörper abragt. Die Sterilitätsbarriere 4 hält den Griffabschnitt 2 steril getrennt von dem vorderen Abschnitt des Stiftes 1, der zunächst anschließend an die Barriere 4 die Fortsätze 5 und 6 aufweist. Die Fortsätze 5 und 6 können integral mit einer einzigen Länge ausgebildet sein, es besteht aber auch die Möglichkeit, den Stift verlängerbar auszugestalten, indem der Fortsatz 6 teleskopisch im Fortsatz 5 beweglich und - beispielsweise durch eine Drehsicherung - bei einer Länge feststellbar ist.

An dem Fortsatz 6 schließt sich der Eingabeabschnitt 7 des Stiftes an, der an seinem vorderen Ende den Monitor-Berührungsabschnitt aufweist, der mit dem Bezugszeichen 8 bezeichnet ist. Bei anderen Ausführungsformen kann sich ein Eingabeabschnitt auch direkt an dem Griffabschnitt bzw. die Barriere anschließen. Der Berührungsabschnitt 8 weist unterschiedliche Monitor-Berührungssektionen auf, und in den genannten Figuren ist die Spitze 10 gezeigt, die am oberen Ende des Eingabeabschnitts 7 liegt. Von der Spitze 10 aus erstreckt sich schräg nach hinten und unten eine im Wesentlichen zylinderförmig ausgebildete Berührungssektion 9.

Der Eingabeabschnitt 7 bildet die erfindungsgemäß ausgestaltete Spitze des Eingabestiftes und wenn ein Monitor mit der Spitze 10 berührt wird, so erzeugt dies einen punktförmigen oder sehr kleinflächigen Berührungspunkt. Mit der Außenseite des Zylinderabschnitts 9 kann eine linien- oder flächenförmige Punkt-Berührung erzeugt werden. Auf diese Weise können mit demselben Eingabestift unterschiedliche Eingaben mit unterschiedlichen Resultaten bei der Bilddarstellung bzw. Bildbearbeitung erfolgen. Es kann beispielsweise ein Schnittbild aus einem CT-Patientenscan am Monitor angezeigt werden und durch die Berührung des Monitors im Bildbereich wird dieses Schnittbild ausgewählt oder abgewählt. Wenn aber mit der Spitze nach der Berührung über eine gewisse Strecke über den Monitor gefahren wird, kann dies als ein Befehl interpretiert werden, der ein Scrollen durch verschiedene Schnittbildebenen bewirkt. Wenn nun mit demselben Stift eine linienförmige oder flächige Eingabe, beispielsweise durch die Berührungssektion 9 erfolgt, wird dies registriert und bei einer Bewegung der flächigen Eingabe kann eine andere Manipulation bewirkt werden, beispielsweise ein Verschieben des Bildes. Dadurch werden Multi-Touch-Funktionen von berührungsempfindlichen Bildschirmen in optimaler Weise durch einen einzigen erfindungsgemäßen Eingabestift nutzbar.

Natürlich können auch mehrere der erfindungsgemäßen Eingabestifte gleichzeitig verwendet werden, beispielsweise lässt sich durch zwei Berührungen mit je einer Spitze 10 eine Messung durchführen.

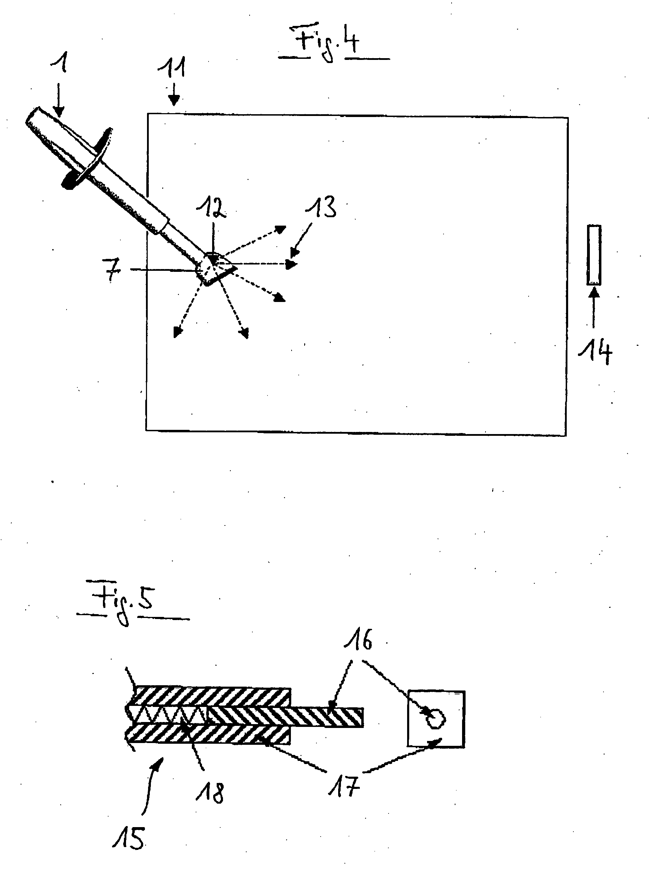

Mit einem Eingabestift, der gemäß einer Ausführungsform der vorliegenden Erfindung mit einem Signalgeber oder Sender ausgestattet ist, lässt sich auch eine rotierende Eingabe bewerkstelligen, wie dies in Figur 4 aufgezeigt wird. Der Eingabestift 1 weist am Eingabeabschnitt 7 eine Lichtquelle, beispielsweise einen Infratrotlichtsender 12 auf, der Infrarotlicht abstrahlt, wie dies durch die Pfeile 13 gezeigt ist. Die Funktion des Senders 12 am Eingabeabschnitt 7 liegt nun darin, festzustellen, ob der Eingabestift 1 gedreht wird. Dazu ist am Monitor 11 ein Signalempfänger 14 angeordnet. Es können auch mehrere Signalempfänger 14 um den Bildschirmrand herum angeordnet sein, und die Signalempfänger können gleichzeitig die Abtaster eines lichtabtastenden Monitors sein. Der Sender 12 sendet das Licht 13 senkrecht abgehend vom Eingabeabschnitt 7 aus, und der Empfänger 14 erfasst dieses Licht. Wenn der Verwender den Stift 1 dreht ohne den Winkel zwischen dem Stift und dem Monitor 11 zu verändern, fällt das Licht 13 auf andere Empfänger am Bildschirm oder am Empfänger 14 wird festgestellt, dass kein Licht vom Sender 12 mehr auftrifft. Diese Eingabe kann registriert und als eine Drehbewegung identifiziert werden, und nach der Identifizierung kann eine entsprechende Drehbewegung beispielsweise auf ein Bild angewendet werden, welches gerade auf den Monitor 11 dargestellt wird. Bei einer anderen, ähnlichen Ausführungsform kann diese Rotationsfunktion ebenfalls (in umgekehrter Weise) mit einer reflektierenden Oberfläche am Eingabeabschnitt 7 und einem Sender/Empfänger am Bildschirm oder mehreren Sendern/Empfängern um den Bildschirm herum ausgestaltet werden.

Die Figur 5 zeigt eine weitere Ausführungsform eines Eingabeabschnitts 15 für einen erfindungsgemäßen Eingabestift. Der Eingabeabschnitt 15 weist einen Stiftfortsatz 16 auf, der in einem Mantel 17 durch eine Feder 18 so gelagert ist, dass er im Grundzustand etwas über den vorderen Rand des Mantels 17 hervorsteht. Durch die Spitze des Stiftfortsatzes 16 können eindimensionale bzw. punktförmige Eingaben getätigt werden. Wenn der Eingabeabschnitt 15 mit etwas Druck auf einen Monitor aufgesetzt wird, wird der Stiftfortsatz 16 gegen den Druck der Feder 18 in den Mantel 17 hineingedrückt und durch die so entstehende Gesamt-Stirnfläche, welche die Stirnflächen des Mantels 17 und des Stiftfortsatzes 16 umfasst, kann eine flächenmäßige Eingabe erfolgen.

## Patentansprüche

1. Eingabestift (1) für einen berührungsempfindlichen medizintechnischen Monitor mit einem Griffabschnitt (2) und einem Eingabeabschnitt (7; 15), wobei der Eingabeabschnitt (7; 15) eindimensionale und zweidimensionale Monitor-Berührungssektionen (9, 10; 16, 17) aufweist,
wobei eine eindimensionale Berührungssektion (10; 16) punktförmig ausgestaltet ist, und eine punktförmige Monitorberührung ermöglicht,
wobei eine zweidimensionale Berührungssektion (9; 17) linien- oder flächenförmig ausgestaltet ist und eine linien- oder flächenförmige Monitorberührung ermöglicht, **dadurch gekennzeichnet, dass** zwischen dem Griffabschnitt (2) und dem Eingabeabschnitt (7, 15) eine flächenförmige Sterilitätsbarriere (4) angeordnet ist, die zu allen Seiten hin quer vom Stiftkörper absteht.

2. Eingabestift nach Anspruch 1, **dadurch gekennzeichnet, dass** der Eingabeabschnitt (7) an bestimmten vorgesehenen Stellen die ein- und zweidimensionalen Berührungssektionen (9, 10) aufweist.

3. Eingabestift nach Anspruch 1, **dadurch gekennzeichnet, dass** der Eingabeabschnitt gestaltveränderlich ausgebildet ist, um durch Gestaltänderung ein- oder zweidimensionalen Berührungssektionen auszubilden.

4. Eingabestift nach Anspruch 3, **dadurch gekennzeichnet, dass** der Eingabeabschnitt formveränderlich ist, insbesondere flexible Berührungssektionen aufweist, die durch Formänderungen flexibel vom eindimensionalen in den zweidimensionalen Zustand wechseln und umgekehrt.

5. Eingabestift nach Anspruch 3, **dadurch gekennzeichnet, dass** der Eingabeabschnitt (15) mechanisch gestaltveränderlich ist, insbesondere zueinander bewegliche, speziell zueinander federnd vorgespannte Teile (16, 17) aufweist, die einzeln oder zusammen die Berührungssektion bilden können.

6. Eingabesystem mit einem berührungsempfindlichen Monitor und einem Eingabestift nach einem der Ansprüche 1 bis 5, **dadurch gekennzeichnet, dass** am Eingabeabschnitt (7) ein Signalgeber (12) und am Monitor (11) ein Signalempfänger (14) angeordnet ist, der aus den vom Signalgeber (12) empfangenen Signalen rotatorische Positionsänderungen des Eingabeabschnitts (7) erkennt, insbesondere Drehungen, die im wesentlichen um die Stiftachse stattfinden.

7. Eingabesystem nach Anspruch 6, **dadurch gekennzeichnet, dass** der Signalgeber einen Lichtabstrahler, insbesondere einen Infrarotlichtabstrahler (12) und der Signalempfänger (14) ein lichtempfindliches Element, insbesondere eine Gruppe von Infrarotlichtempfängern aufweist, die um den Monitorrand angeordnet sind und zur Berührungsbestimmung für den berührungsempfindlichen Monitor (11) dienen.

8. Eingabesystem mit einem berührungsempfindlichen Monitor und einem Eingabestift nach einem der Ansprüche 1 bis 5, **dadurch gekennzeichnet, dass** am Eingabeabschnitt (7) ein Reflektor und am Monitor mindestens ein Signalgeber und mindestens ein Signalempfänger angeordnet sind, wobei der Signalempfänger aus den vom Reflektor empfangenen Signalen rotatorische Positionsänderungen des Eingabeabschnitts erkennt, insbesondere Drehungen, die im wesentlichen um die Stiftachse stattfinden.

9. Eingabesystem nach Anspruch 8, **dadurch gekennzeichnet, dass** der Signalgeber einen Lichtabstrahler, insbesondere einen Infrarotlichtabstrahler und der Signalempfänger ein lichtempfindliches Element, insbesondere eine Gruppe von Infrarotlichtempfängern aufweist, die um den Monitorrand angeordnet sind und zur Berührungsbestimmung für den berührungsempfindlichen Monitor dienen.

## Claims

1. An input pen (1) for a touch-sensitive medical monitor, comprising a grip portion (2) and an input portion (7; 15), wherein the input portion (7; 15) comprises one-dimensional and two-dimensional monitor contact sections (9, 10; 16, 17), wherein a one-dimensional contact section (10; 16) is configured to be punctual and enables a punctual contact with the monitor, wherein a two-dimensional contact section (9; 17) is configured to be linear or planar and enables a linear or planar contact with the monitor, **characterised in that** a planar sterility barrier (4) is arranged between the grip portion (2) and the input portion (7; 15) and projects transversely from the body of the pen on all sides.

2. The input pen according to Claim 1, **characterised in that** the input portion (7) comprises the one-dimensional and two-dimensional contact sections (9, 10) at particular locations provided.

3. The input pen according to Claim 1, **characterised in that** the input portion is formed so as to be variable in shape, in order to form one-dimensional or two-dimensional contact sections by changing its shape.

4. The input pen according to Claim 3, **characterised in that** the input portion is variable in shape and in particular comprises flexible contact sections which flexibly change from a one-dimensional state to a two-dimensional state and vice versa, by changing their shape.

5. The input pen according to Claim 3, **characterised in that** the input portion (15) is mechanically variable in shape and in particular comprises parts (16, 17) which can be moved with respect to each other and are specifically biased elastically with respect to each other, and which individually or together can form the contact section.

6. An input system comprising a touch-sensitive monitor and an input pen according to any one of Claims 1 to 5, **characterised in that** a signal emitter (12) is arranged on the input portion (7), and a signal receiver (14) is arranged on the monitor (11) and identifies rotational changes in the position of the input portion (7) from the signals received from the signal emitter (12), in particular rotations made substantially about the axis of the pen.

7. The input system according to Claim 6, **characterised in that** the signal emitter comprises a light emitter, in particular an infrared light emitter (12), and the signal receiver (14) comprises a light-sensitive element, in particular a group of infrared light receivers which are arranged around the edge of the monitor and serve to determine a contact with the touch-sensitive monitor (11).

8. An input system comprising a touch-sensitive monitor and an input pen according to any one of Claims 1 to 5, **characterised in that** a reflector is arranged on the input portion (7), and at least one signal emitter and at least one signal receiver are arranged on the monitor, wherein the signal receiver identifies rotational changes in the position of the input portion from the signals received from the reflector, in particular rotations made substantially about the axis of the pen.

9. The input system according to Claim 8, **characterised in that** the signal emitter comprises a light emitter, in particular an infrared light emitter, and the signal receiver comprises a light-sensitive element, in particular a group of infrared light receivers which are arranged around the edge of the monitor and serve to determine a contact with the touch-sensitive monitor.

## Revendications

1. Crayon de saisie (1) pour un moniteur médical tactile, comportant une partie de préhension (2) et une partie de saisie (7 ; 15), dans lequel la partie de saisie (7 ; 15) comporte des sections de contact de moniteur unidimensionnelles et bidimensionnelles (9, 10 ; 16, 17),
dans lequel une section de contact unidimensionnelle (10 ; 16) est configurée en forme de point et permet un contact ponctuel avec le moniteur,
dans lequel une section de contact bidimensionnelle (9 ; 17) est configurée en forme de ligne ou de plan et permet un contact linéaire ou plan avec le moniteur,
**caractérisé en ce qu'**une barrière de stérilité plane (4) est agencée entre la partie de préhension (2) et la partie de saisie (7, 15), laquelle barrière fait saillie vers tous les côtés transversalement au corps du crayon.

2. Crayon de saisie selon la revendication 1, **caractérisé en ce que** la partie de saisie (7) comporte les sections de contact unidimensionnelle et bidimensionnelle (9, 10) à certains emplacements prédéterminés.

3. Crayon de saisie selon la revendication 1, **caractérisé en ce que** la partie de saisie est de configuration variable pour former des sections de contact unidimensionnelles ou bidimensionnelles par changement de configuration.

4. Crayon de saisie selon la revendication 3, **caractérisé en ce que** la partie de saisie est de forme variable, en particulier comporte des sections de contact souples qui passent de manière flexible de l'état unidimensionnel à l'état bidimensionnel et vice versa, par des changements de forme.

5. Crayon de saisie selon la revendication 3, **caractérisé en ce que** la partie de saisie (15) est de configuration variable mécaniquement, en particulier comporte des pièces (16, 17) mobiles l'une par rapport à l'autre, spécifiquement précontraintes élastiquement l'une par rapport à l'autre, qui peuvent former individuellement ou ensemble la section de contact.

6. Système de saisie comportant un moniteur tactile et un crayon de saisie selon l'une des revendications 1 à 5, **caractérisé en ce qu'**un émetteur de signaux (12) est agencé sur la partie de saisie (7) et un récepteur de signaux (14) est agencé sur le moniteur (11), lequel récepteur identifie des changements de position en rotation de la partie de saisie (7) à partir des signaux reçus de l'émetteur de signaux (12), en particulier des rotations, qui se produisent sensiblement autour de l'axe du crayon.

7. Système de saisie selon la revendication 6, **caractérisé en ce que** l'émetteur de signaux comporte un émetteur de lumière, en particulier un émetteur de lumière infrarouge (12) et le récepteur de signaux (14) comporte un élément sensible à la lumière, en particulier un groupe de récepteurs de lumière infrarouge, qui sont agencés autour du bord du moniteur et qui servent à déterminer le contact avec le moniteur tactile (11).

8. Système de saisie comportant un moniteur tactile et un crayon de saisie selon l'une des revendications 1 à 5, **caractérisé en ce qu'**un réflecteur est agencé sur la partie de saisie (7) et au moins un émetteur de signaux et au moins un récepteur de signaux sont agencés sur le moniteur, dans lequel le récepteur de signaux identifie des changements de position en rotation de la partie de saisie à partir des signaux reçus du réflecteur, en particulier des rotations, qui se produisent sensiblement autour de l'axe du crayon.

9. Système de saisie selon la revendication 8, **caractérisé en ce que** l'émetteur de signaux comporte un émetteur de lumière, en particulier un émetteur de lumière infrarouge, et le récepteur de signaux comporte un élément sensible à la lumière, en particulier un groupe de récepteurs de lumière infrarouge, qui sont agencés autour du bord du moniteur et qui servent à déterminer le contact avec le moniteur tactile.
